# EUROPEAN PATENT SPECIFICATION

(11) **EP 2 478 758 B1**
(45) Date of publication and mention of the grant of the patent: **27.02.2019**
(21) Application number: 11009712.8
(22) Date of filing: 08.12.2011
(51) Int. Cl.: A01F 29/00, A01K 5/00

(54) **Distributor machine**
Verteilermaschine
Distributeur

(30) Priority: 21.01.2011 GB 201101130
(43) Date of publication of application: 25.07.2012
(73) Proprietor: Kverneland ASA, 4355 Kvernaland (NO)
(72) Inventor: Laursen, Boje, 5792 Arslev (DK)
(74) Representative: Atkinson, Ian Anthony

(56) References cited:
- EP-A1- 1 532 860
- EP-A1- 2 218 322
- EP-A2- 1 405 557
- FR-A1- 2 742 306

## Description

The present invention relates to a distributor machine for shredding and distributing fibrous materials such as hay, straw, maize and grass silage, for use as animal fodder and litter products. In particular, but not exclusively, the invention relates to a distributor machine for distributing baled materials, in the form of round or square bales. It may also be used for shredding and distributing fibrous materials in bulk form, for example clamp silage. Such machines are commonly called "bale choppers". The invention also relates to a method of distributing fibrous materials.

US patent application US2003/0075629A1 describes a distributor machine of a known type having a chamber for receiving baled materials, a shredder drum or rotor for shredding the baled materials into small pieces and a blower for distributing the shredded materials through a swivel chute. The shredder drum comprises a cylindrical body that supports a set of circular discs, each disc being equipped with a plurality of cutting blades that extend radially from the disc. The discs of the shredder drum co-operate with a barrier in the form of a harrow or comb that is mounted adjacent to the drum and has a plurality of plate-like teeth that extend towards the discs. The comb prevents large clumps of material being transferred into the blower chamber. In some embodiments, the barrier can move around the drum to adjust the output rate. Embodiments having two or three shredder drums are also disclosed.

FR2742306A1 describes a distributor for baled agricultural products having a distribution fan fitted into the front face of a hopper and a shredder device comprising a rotary rake. A comb mounted above the rake is adjustable to adjust the size of a feeding gap between the comb and the rake.

In some distributor machines, the shredder drum and the blower are driven from a common drive input, for example a drive shaft from a tractor, via a distribution gearbox. The drum and the blower are therefore driven synchronously and when operation of the machine commences, the drum and the blower both start to rotate at the same time. One problem with this arrangement is that shredded material can be deposited by the shredder drum in the blower chamber before the blower reaches full operational speed, which can cause a blockage.

European patent application EP0968643A1 describes a distributor machine that addresses this problem. The blower fan and the shredder drum are driven from a distribution gearbox, power being transmitted directly to the blower by a drive shaft, whereas power is transmitted to the shredder drum by a drive belt that includes a clutch mechanism. The clutch mechanism operates by adjusting the belt tension to control whether or not drive is transmitted to the shredder drum. When starting the machine, the tension is reduced so that drive is not transmitted to the drum. This allows the blower to reach full operating speed before the shredder drum starts feeding material into the blower chamber and thus helps to prevent blockages.

The clutch mechanism described in EP 0968643A1 is complex and adds to the cost of the distributor machine. It is an object of the present invention to provide a distributor machine that mitigates these and/or other disadvantages, or that provides a useful alternative thereto.

According to one aspect of the present invention there is provided a distributor machine for distributing fibrous materials according to claim 1. The machine comprises a chamber for receiving fibrous materials, a shredder device for shredding the fibrous materials, a barrier device associated with the shredder device for holding back or recirculating unshredded materials, and a blower device for distributing shredded materials fed through a feeding gap from the shredding device to the blower device, wherein the distributor machine includes a regulator device for regulating the feeding of shredded materials through the feeding gap, said regulator device being moveable between a closed position in which the feeding gap is blocked and feeding of shredded material is obstructed, and an open position in which the feeding gap is open and feeding of shredded material is substantially unobstructed.

When the regulator device is in a closed position, feeding of shredded materials to the blower is substantially prevented. This allows the blower to reach operating speed without the risk of blockage. When it has reached operating speed the regulator device can be opened to allow feeding of shredded materials to the blower. The arrangement is simple and effective and avoids the need for a clutch mechanism.

Advantageously, the regulator device includes a plurality of regulator elements that extend from a support element towards the shredder device. The regulator elements may for example be positioned between any outwardly-extending blades or cutters provided on the shredder drum to avoid contact therewith.

The support element is preferably pivotable about a pivot axis in order to move the regulator device between the closed position and the open position. This is a simple and effective mechanism that allows the position of the regulating device to be adjusted radially relative to the shredder drum.

Advantageously, the support element is located above the shredder device and the regulator elements extend downwards from the support element towards the shredder device. The support element may for example consist of a support bar that extends transversely across the width of the machine, and is mounted on pivot arms for rotation about a pivot axis.

When the regulator device is located in the closed position, free ends of the regulator elements are preferably located close to the shredder device but at a small clearance distance therefrom. The regulator elements thus substantially prevent shredded materials from being fed to the blower but without preventing rotation of the shredder drum.

When the regulator device is in the open position, free ends of the regulator elements are preferably raised above the shredder device to avoid obstructing the feeding gap.

The barrier device preferably includes a plurality of barrier elements that extend radially towards the shredder device, the regulator elements being located between the barrier elements. The barrier device may for example be in the form of a comb or harrow having a plurality of spaced harrow plates, the regulator elements being located between the harrow plates.

When the regulator device is in the open position, the regulator elements are preferably recessed behind the barrier elements to avoid contact with fibrous materials in the chamber, so that they do not obstruct movement either of the fibrous materials towards the shredder drum, or of any large clumps of unshredded material that are returned by the barrier device to the chamber for further processing.

When the regulator device is in the closed position, the regulator elements are preferably supported by a crossbar located above the shredder device. This provides additional support for the regulator elements and helps them to withstand the load exerted by the fibrous materials in the chamber.

The chamber of the distributor machine is preferably constructed and arranged to receive the fibrous materials as one or more bales.

According to another aspect of the present invention there is provided a method distributing fibrous materials according to claim 11.

The method comprises loading the fibrous materials into a distributor machine having a chamber for fibrous materials, a shredder device, a barrier device associated with the shredder device, a blower device and an adjustable regulator device, closing the regulator device to obstruct the feeding of shredded materials to the blower device, actuating the blower device and the shredder device, and when the blower device reaches a predetermined operating speed, opening the regulator device to allow shredded materials to be fed to the blower device for distribution.

At the end of an operating cycle, the regulator device is preferably closed before halting operation of the blower device to prevent a build-up of shredded material in the blower device.

The fibrous materials are preferably loaded into the chamber as one or more bales.

The distributor machine comprises preferably a distributor machine according to any one of the preceding statements.

An embodiment of the invention will now be described, by way of example, with reference to the accompanying drawings in which:
Figure 1 is a side view of the distributor machine, with part of the housing cut away to reveal internal parts of the machine;
Figure 2 is an isometric view showing internal components of the distributor machine;
Figure 3 is a side view showing the internal components of the distributor machine, with a feed regulator in a closed configuration, and
Figure 4 is a side view showing internal components of the distributor machine with the feed regulator in an open configuration.

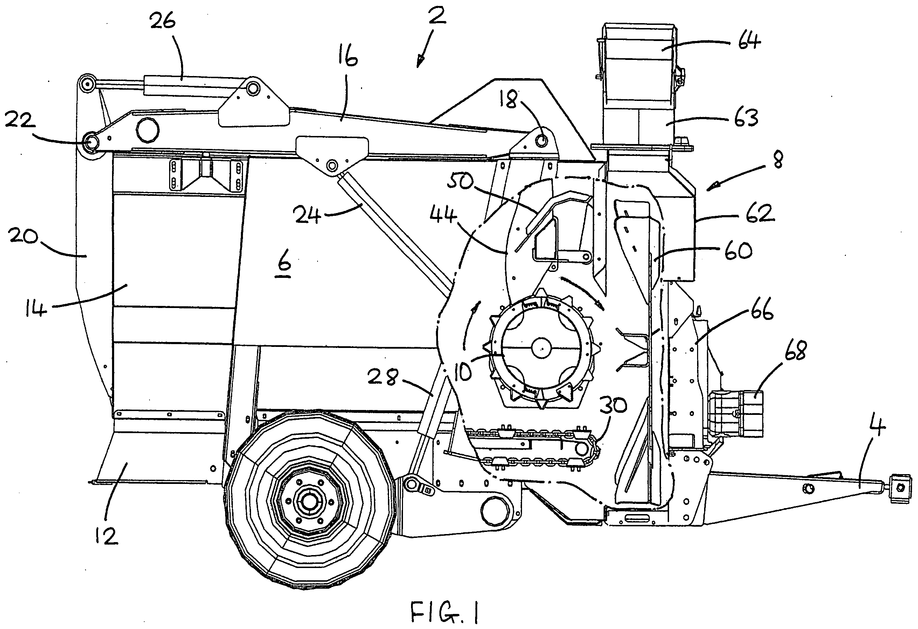

As shown in Figure 1 the distributor machine comprises a wheeled vehicle 2 having a tow bar 4 that allows it to be towed behind a tractor. The rear part of the vehicle 2 comprises a bale chamber 6 for receiving one or more bales of fibrous material such as hay, straw, maize or grass silage, and the front part comprises a blower 8 for distributing shredded materials. A shredder drum 10 is located between the bale chamber 6 and the blower 8. In use, the shredder drum 10 unravels and shreds the fibrous materials located in the bale chamber 6 and feeds the shredded material into the blower 8 for distribution. The shredded material may be used for example as fodder or litter for farm animals.

In more detail, the bale chamber 6 consists of a closed compartment having a base 12 and two side walls 14. A loading boom 16 is attached by a pivot 18 to the upper part of the bale chamber 6 and a rear door 20 is attached to a door pivot 22 at the rear end of the loading boom 16. The loading boom 16 and the rear door 20 may be opened by hydraulic rams 24, 26 to allow access to the interior of the bale chamber 6. The bale chamber 6 may also be lowered to the ground by actuating a third ram 28, to allow for easy loading of bales.

Located within the base 12 of the bale chamber 6 is a conveyor 30 for feeding bales within the bale chamber 6 towards the shredder drum 10. The conveyor 30 may for example consist of a set of parallel conveyor bars 32 linked by a pair of endless drive chains 34.

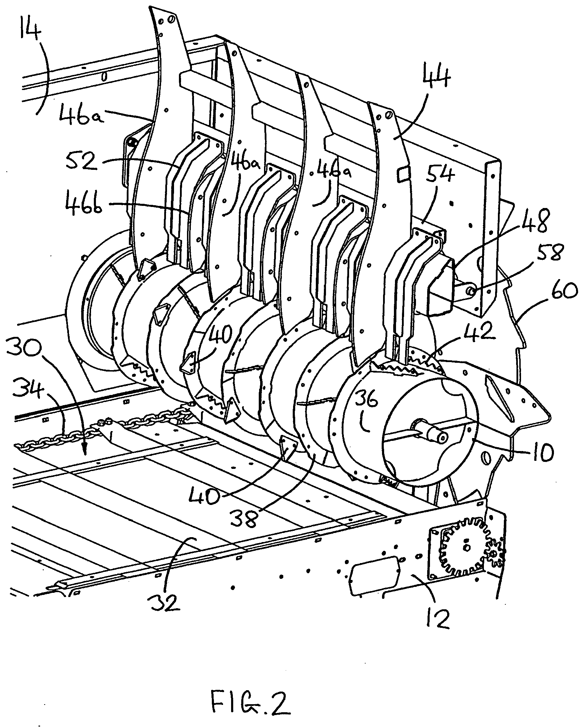

The shredder drum 10, which is shown most clearly in Figure 2, includes a cylindrical body 36 on which are mounted a set of cylindrical discs 38, the discs being spaced along the length of the drum. Each disc 38 supports a set of blades 40, which extend outwards from the circumference of the disc and are set at an acute angle to the plane of the disc 38. In this embodiment, the blades 40 are set alternately on opposite sides of the disc 38. Sets of gripper teeth 42 are attached to the cylindrical surface of the drum 10 between the discs 38.

A barrier 44 in the form of a comb or harrow is mounted in a fixed position above the shredder drum 10. The barrier 44 comprises a set of harrow plates 46a, 46b wherein each plate 46a, 46b is located above one of the discs 38. The lower end of each harrow plate 46a, 46b is located close to the circumference of the associated disc so that the blades 40 mounted on the disc pass on either side of the harrow plate. The barrier 44 thus supports the baled material as it is chopped by the blades 40 and prevents large clumps of uncut material from passing into the blower 8.

In this embodiment there are two types of harrow plate: major harrow plates 46a that extend upwards towards the top of the bale chamber 6 and smaller minor harrow plates 46b. The major harrow plates 46a serve as deflectors to deflect large clumps of bale material back into the bale chamber 6 for further processing. The minor harrow plates 46b only serve to support the bale material as it is being chopped. The chopped material is fed by the blades 40 and the gripper teeth 42 to the blower 8 through a feeding gap 47 located between the top of the shredder drum 10 and a crossbar 48 that is mounted above the drum.

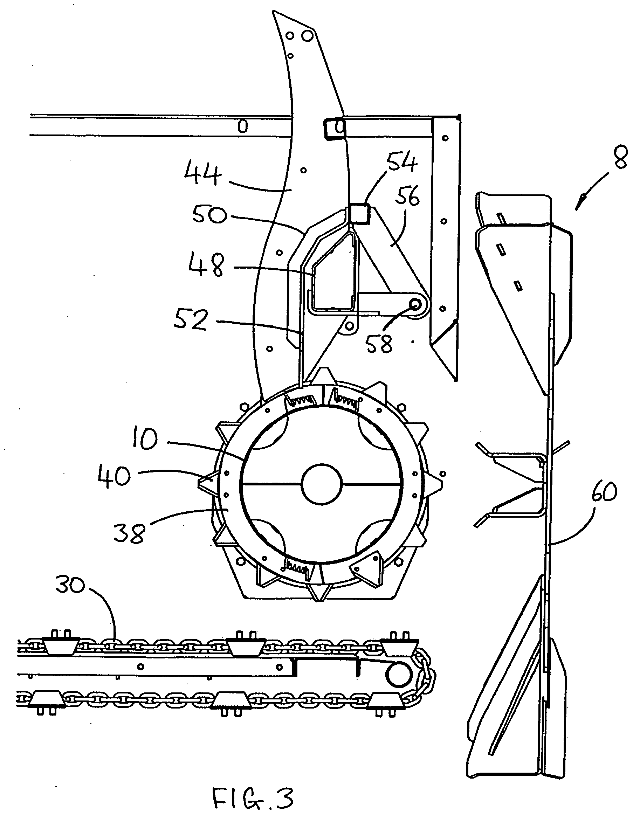

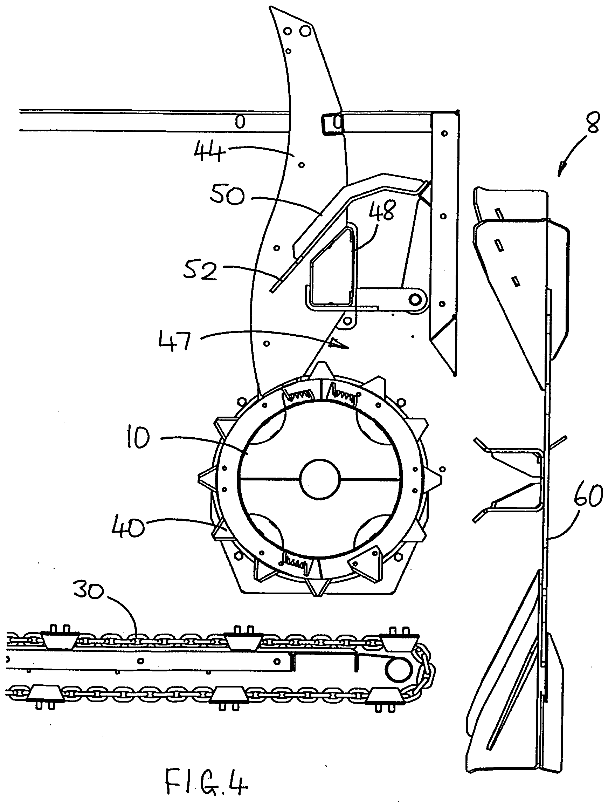

Also mounted above the shredder drum 10 is a feed regulator 50. The feed regulator 50 includes a set of curved regulator plates 52 that are attached at their upper ends to a support bar 54 and extend downwards between the harrow plates 46a, 46b towards the shredder drum 10. The support bar 54 is attached by pivot arms 56 to a pivot joint 58, allowing the feed regulator 50 to pivot between a closed position shown in Figures 2 and 3 and an open position shown in Figures 1 and 4. The support bar 54 extends transversely across the machine, above and parallel to the rotational axis of the shredder drum 10. Preferably, the support bar 54 is displaced slightly from axis of the shredder drum 10 in the direction of the blower 8.

When the feed regulator 50 is in the closed position the lower ends of the regulator plates 52 are located close to the cylindrical surface of the shredder drum 10 so that the plates block the feeding gap 47 between the drum 10 and the crossbar 48, while still leaving a small clearance relative to the blades 40 and the gripper teeth 42 to allow for rotation of the drum 10. This substantially prevents chopped material from being transferred through the feeding gap 47 to the ejection blower 8, or at least reduces it to a minimum amount.

When the feed regulator 50 is in the open position the regulator plates 52 are raised away from the shredder drum 10 allowing chopped material to be transferred through the feeding gap 47 to the ejection blower 8. In this open position the free ends of the regulator plates 52 are recessed behind the bale contacting surfaces of the major harrow plates 46a so that they do not come into contact with the bale surface.

Movement of the feed regulator 50 between the closed and opened positions may be driven by any suitable means, for example by a hydraulic ram that can be operated from the outside of the machine or from the cab of a tractor. Alternatively, the feed regulator can be operated by a simple hand lever or an electric actuator.

The ejection blower 8 includes a large flywheel or blower fan 60 that is mounted in a blower housing 62 having a tangential outlet conduit 63 that is connected to a swivel chute 64 located in the upper part of the housing. As shredded bale material is fed into the blower 8 by the shredder drum 10, the rotating fan 60 creates a powerful airflow that entrains the shredded material and ejects it through the swivel chute 64.

The blower fan 60 and the shredder drum 10 are driven from a distribution gearbox 66 having a drive input 68 for connection (for example via a drive shaft) to the drive output of a tractor or other machine, and two drive outputs (not shown) that provide drive to the blower fan 60 and the shredder drum 10. Drive is transmitted continuously to both outputs and therefore the blower fan 60 and the shredder drum 10 both start to rotate simultaneously when commencing operation.

In operation, bales are loaded into the bale chamber 6 and fed towards the shredder drum 10 by the conveyor 30. The feed regulator 50 is initially in a closed position as shown in figures 2 and 3 to prevent material passing through the feeding gap 47 into the blower chamber 62. Drive is delivered to the blower fan 60 and the shredder drum 10 from the distributor gearbox 66, causing both to rotate. The feed regulator 50 is held in the closed position until the blower fan 60 has reached operating speed. This prevents chopped bale material being fed into the blower chamber 62, where it could block rotation of the fan 60.

Once the blower fan 60 has reached operating speed, the feed regulator 50 is raised to the open position as shown in figures 1 and 4 allowing shredded material to pass through the feeding gap 47 into the blower chamber 62, from where it is blown by the fan 60 through the outlet conduit 63 and the chute 64. Rotation of the shredder drum 10 chops the bale material into small pieces and feeds this chopped material into the blower chamber 62 as the bale advances. This continues until the bale has been entirely dispersed or a sufficient quantity of shredded material has been distributed. The feed regulator 50 is then returned to the closed position before halting operation of the blower fan 60, to ensure that there is no build-up of shredded material in the blower chamber 62.

In the embodiment shown in the drawings, each regulator plate 52 of the feed regulator 50 has a slot at its free end. This slot is needed only if the shredder drum 10 has extra sets of discs 38 and blades 40. If additional discs and blades are not provided (as in the embodiment shown in the drawings), the slots may optionally be omitted.

Although the distributor machine shown in the drawings has only one shredder drum 10, the machine may alternatively have two or more shredder drums, which may be arranged vertically one above another, for example as described in US 2003/0075629A1.

## Claims

1. A distributor machine for distributing fibrous materials comprising a chamber (6) for receiving fibrous materials, a shredder device (10) for shredding the fibrous materials, a barrier device (44) associated with the shredder device for holding back or recirculating unshredded materials, and a blower device (8) for distributing shredded materials fed through a feeding gap (47) from the shredding device to the blower device, wherein the distributor machine includes a regulator device (50) for regulating the feeding of shredded materials through the feeding gap; **characterised by** said regulator device (50) being moveable between a closed position in which the feeding gap (47) is blocked and feeding of shredded material is obstructed, and an open position in which the feeding gap (47) is open and feeding of shredded material is substantially unobstructed.

2. A distributor machine according to claim 1, in which the regulator device (50) includes a plurality of regulator elements (52) that extend from a support element (54) towards the shredder device.

3. A distributor machine according to claim 2, in which the support element (54) is pivotable about a pivot axis in order to move the regulator device between the closed position and the open position.

4. A distributor machine according to claim 2 or claim 3, in which the support element (54) is located above the shredder device (10) and the regulator elements (52) extend downwards from the support element towards the shredder device.

5. A distributor machine according to any one of claims 2 to 4, in which when the regulator device (50) is located in the closed position, free ends of the regulator elements (52) are located close to the shredder device (10) but at a clearance distance therefrom.

6. A distributor machine according to any one of claims 2 to 5, wherein when the regulator device (50) is in the open position, free ends of the regulator elements (52) are raised above the shredder device (10) to avoid obstructing the feeding gap.

7. A distributor machine according to any one of claims 2 to 6, in which the barrier device (44) includes a plurality of barrier elements (46a, 46b) that extend radially towards the shredder device (10), the regulator elements (52) being located between the barrier elements (46a, 46b).

8. A distributor machine according to claim 7, in which when the regulator device (50) is in the open position, the regulator elements (52) are recessed behind the barrier elements (46a, 46b) to avoid contact with fibrous materials in the chamber.

9. A distributor machine according to any one of claims 2 to 8, in which when the regulator device (50) is in the closed position, the regulator elements (52) are supported by a crossbar (48) located above the shredder device.

10. A distributor machine according to any one of the preceding claims, wherein the chamber (6) is constructed and arranged to receive the fibrous materials as one or more bales.

11. A method of distributing fibrous materials comprising:
loading the fibrous materials into a distributor machine having a chamber (6) for fibrous materials, a shredder device (10), a barrier device (44) associated with the shredder device, a blower device (8) and an adjustable regulator device (50),
**characterised by** closing the regulator device (50) to obstruct the feeding of shredded materials to the blower device,
actuating the blower device (8) and the shredder device (10), and
when the blower device reaches a predetermined operating speed, opening the regulator device (50) to allow shredded materials to be fed to the blower device for distribution.

12. A method according to claim 11, wherein at the end of an operating cycle, the regulator device (50) is closed before halting operation of the blower device (8), to prevent a build-up of shredded material in the blower device.

13. A method according to claim 11 or claim 12, wherein the fibrous materials are loaded into the chamber (6) as one or more bales.

14. A method according to any one of claims 11 to 13, wherein the distributor machine comprises a distributor machine according to any one of claims 1 to 10.

## Patentansprüche

1. Verteilermaschine zum Verteilen von faserigem Material, mit einer Kammer (6) zur Aufnahme von faserigem Material, einer Zerkleinerungsvorrichtung (10) zum Zerkleinern des faserigen Materials, einer Sperrvorrichtung (44), die der Zerkleinerungsvorrichtung zugeordnet ist, um nicht zerkleinertes Material zurückzuhalten oder zu rezirkulieren, und einer Gebläsevorrichtung (8) zum Verteilen von zerkleinertem Material, das durch einen Zufuhrabstand (47) von der Zerkleinerungsvorrichtung der Gebläsevorrichtung zugeführt wird, wobei die Verteilermaschine eine Reglervorrichtung (50) zum Regeln der Zufuhr des zerkleinerten Materials durch den Zufuhrabstand aufweist; **dadurch gekennzeichnet, dass** die Reglervorrichtung (50) beweglich ist zwischen einer geschlossenen Position, an welcher der Zufuhrabstand (47) blockiert ist und die Zufuhr von zerkleinertem Material gesperrt ist, und einer offenen Position, an welcher der Zufuhrabstand (47) offen ist und die Zufuhr von zerkleinertem Material im Wesentlichen unversperrt ist.

2. Verteilermaschine nach Anspruch 1, wobei die Reglervorrichtung (50) eine Mehrzahl von Reglerelementen (52) aufweist, die sich von einem Trägerelement (54) in Richtung der Zerkleinerungsvorrichtung erstrecken.

3. Verteilermaschine nach Anspruch 2, wobei das Trägerelement (54) um eine Drehachse drehbar ist, um die Reglervorrichtung zwischen der geschlossenen Position und der offenen Position zu bewegen.

4. Verteilermaschine nach Anspruch 2 oder 3, wobei das Trägerelement (54) oberhalb der Zerkleinerungsvorrichtung (10) angeordnet ist, und wobei sich die Reglerelemente (52) von dem Trägerelement nach unten in Richtung der Zerkleinerungsvorrichtung erstrecken.

5. Verteilermaschine nach einem der Ansprüche 2 bis 4, wobei, wenn sich die Reglervorrichtung (50) an der geschlossenen Position befindet, die freien Enden der Reglerelemente (52) dicht an der Zerkleinerungsvorrichtung (10) angeordnet sind, jedoch mit einem Abstand dazu.

6. Verteilermaschine nach einem der Ansprüche 2 bis 5, wobei, wenn sich die Reglervorrichtung (50) an der offenen Position befindet, die freien Elemente der Reglerelemente (52) über die Zerkleinerungsvorrichtung (10) angehoben sind, um ein Versperren des Zufuhrabstands zu vermeiden.

7. Verteilermaschine nach einem der Ansprüche 2 bis 6, wobei die Sperrvorrichtung (44) eine Mehrzahl von Sperrelementen (46a, 46b) aufweist, die sich radial in Richtung der Zerkleinerungsvorrichtung (10) erstrecken, wobei die Reglerelemente (52) zwischen den Sperrelementen (46a, 46b) angeordnet sind.

8. Verteilermaschine nach Anspruch 7, wobei, wenn sich die Reglervorrichtung (50) an der offenen Position befindet, die Reglerelemente (52) hinter den Sperrelementen (46a, 46b) ausgespart sind, um einen Kontakt mit faserigem Material in der Kammer zu verhindern.

9. Verteilermaschine nach einem der Ansprüche 2 bis 8, wobei, wenn sich die Reglervorrichtung (50) an der geschlossenen Position befindet, die Reglerelemente (52) durch einen Querträger (48) getragen werden, der sich oberhalb der Zerkleinerungsvorrichtung befindet.

10. Verteilermaschine nach einem der vorstehenden Ansprüche, wobei die Kammer (6) für die Aufnahme des faserigen Material als ein oder mehrere Ballen gestaltet und angeordnet ist.

11. Verfahren zum Verteilen von faserigem Material, umfassend:
Laden des faserigen Materials in eine Verteilermaschine mit einer Kammer (6), einer Zerkleinerungsvorrichtung (10), einer Sperrvorrichtung (44), die der Zerkleinerungsvorrichtung zugeordnet ist, einer Gebläsevorrichtung (8) und einer verstellbaren Reglervorrichtung (50);
**gekennzeichnet durch** das Schließen der Reglervorrichtung (50) zum Sperren der Zufuhr von zerkleinertem Material an die Gebläsevorrichtung;
Betätigen der Gebläsevorrichtung (8) und der Zerkleinerungsvorrichtung (10); und
wenn die Gebläsevorrichtung eine vorbestimmte Betriebsgeschwindigkeit erreicht, Öffnen der Reglervorrichtung (50), um die Zufuhr von zerkleinertem Material an die Gebläsevorrichtung zur Verteilung zu ermöglichen.

12. Verfahren nach Anspruch 11, wobei am Ende eines Arbeitszyklus die Reglervorrichtung (50) geschlossen wird, bevor der Betrieb der Gebläsevorrichtung (8) angehalten wird, um eine Ansammlung von zerkleinertem Material in der Gebläsevorrichtung zu verhindern.

13. Verfahren nach Anspruch 11 oder 12, wobei das faserige Material als ein oder mehrere Ballen in die Kammer (6) geladen wird.

14. Verfahren nach einem der Ansprüche 11 bis 13, wobei die Verteilermaschine eine Verteilermaschine nach einem der Ansprüche 1 bis 10 umfasst.

## Revendications

1. Machine distributrice pour distribuer des matériaux fibreux comprenant une chambre (6) pour recevoir des matériaux fibreux, un dispositif de déchiquetage (10) pour déchiqueter les matériaux fibreux, un dispositif barrière (44) associé au dispositif de déchiquetage pour retenir ou faire circuler les matériaux non déchiquetés, et un dispositif souffleur (8) pour distribuer les matériaux déchiquetés amenés à travers un espace d'alimentation (47) du dispositif de déchiquetage au dispositif souffleur, la machine distributrice comprenant un dispositif régulateur (50) pour régler l'alimentation des matériaux déchiquetés à travers l'espace d'alimentation ; **caractérisée en ce que** ledit dispositif régulateur (50) est mobile entre une position fermée dans laquelle l'espace d'alimentation (47) est bloqué et l'alimentation en matériaux déchiquetés est obstruée, et une position ouverte dans laquelle l'espace d'alimentation (47) est ouvert et l'alimentation en matériaux déchiquetés est sensiblement non obstruée.

2. Machine distributrice selon la revendication 1, le dispositif régulateur (50) comprenant une pluralité d'éléments régulateurs (52) qui s'étendent d'un élément de support (54) vers le dispositif de déchiquetage.

3. Machine distributrice selon la revendication 2, l'élément de support (54) pouvant pivoter autour d'un axe de pivotement afin de déplacer le dispositif régulateur entre la position fermée et la position ouverte.

4. Machine distributrice selon la revendication 2 ou 3, l'élément de support (54) étant situé au-dessus du dispositif de déchiquetage (10) et les éléments régulateurs (52) s'étendant vers le bas depuis l'élément de support vers le dispositif de déchiquetage.

5. Machine distributrice selon l'une quelconque des revendications 2 à 4, lorsque le dispositif régulateur (50) est situé en position fermée, les extrémités libres des éléments régulateurs (52) étant situées près du dispositif de déchiquetage (10) mais à une distance de dégagement de celui-ci.

6. Machine distributrice selon l'une quelconque des revendications 2 à 5, lorsque le dispositif régulateur (50) est en position ouverte, les extrémités libres des éléments de réglage (52) étant levées au-dessus du dispositif de déchiquetage (10) pour éviter d'obstruer l'espace d'alimentation.

7. Machine distributrice selon l'une quelconque des revendications 2 à 6, le dispositif barrière (44) comprenant une pluralité d'éléments barrières (46a, 46b) qui s'étendent radialement vers le dispositif de déchiquetage (10), les éléments régulateurs (52) étant situés entre les éléments barrières (46a, 46b).

8. Machine distributrice selon la revendication 7, lorsque le dispositif régulateur (50) est en position ouverte, les éléments régulateurs (52) étant encastrés derrière les éléments barrières (46a, 46b) pour éviter tout contact avec des matériaux fibreux dans la chambre.

9. Machine distributrice selon l'une quelconque des revendications 2 à 8, lorsque le dispositif régulateur (50) est en position fermée, les éléments régulateurs (52) étant supportés par une barre transversale (48) située au-dessus du dispositif de déchiquetage.

10. Machine distributrice selon l'une quelconque des revendications précédentes, la chambre (6) étant construite et conçue pour recevoir les matériaux fibreux sous forme d'une ou de plusieurs balles.

11. Procédé de distribution de matériaux fibreux comprenant les étapes consistant à :
charger les matériaux fibreux dans une machine distributrice ayant une chambre (6) pour matériaux fibreux, un dispositif de déchiquetage (10), un dispositif barrière (44) associé au dispositif de déchiquetage, un dispositif souffleur (8) et un dispositif régulateur (50) réglable,
**caractérisé par** la fermeture du dispositif régulateur (50) pour obstruer l'alimentation en matériaux déchiquetés vers le dispositif souffleur,
actionner le dispositif souffleur (8) et le dispositif de déchiquetage (10), et
lorsque le dispositif souffleur atteint une vitesse de fonctionnement prédéfinie, ouvrir le dispositif régulateur (50) pour permettre aux matériaux déchiquetés d'être amenés au dispositif souffleur pour distribution.

12. Procédé selon la revendication 11, à la fin d'un cycle opérationnel, le dispositif régulateur (50) étant fermé avant d'arrêter le fonctionnement du dispositif souffleur (8), pour empêcher une accumulation de matériaux déchiquetés dans le dispositif souffleur.

13. Procédé selon la revendication 11 ou 12, les matériaux fibreux étant chargés dans la chambre (6) sous forme d'une ou de plusieurs balles.

14. Procédé selon l'une quelconque des revendications 11 à 13, la machine distributrice comprenant une machine distributrice selon l'une quelconque des revendications 1 à 10.
